# EUROPÄISCHE PATENTSCHRIFT

(11) **EP 2 074 890 B1**
(45) Veröffentlichungstag und Bekanntmachung des Hinweises auf die Patenterteilung: **26.11.2014**
(21) Anmeldenummer: 08022002.3
(22) Anmeldetag: 18.12.2008
(51) Int. Cl.: A23L 1/015

(54) **Verfahren zur Verminderung des Acrylamidgehaltes bei kohlehydrathaltigen Lebensmitteln**
Method for reducing the acrylamide content of food containing carbohydrates
Procédé de réduction de la teneur en acrylamide dans des aliments contenant des glucides

(30) Priorität: 21.12.2007 DE 102007061350
(43) Veröffentlichungstag der Anmeldung: 01.07.2009
(73) Patentinhaber: Jungbunzlauer Ladenburg GmbH, 68526 Ladenburg (DE)
(72) Erfinder: Pfeiffer, Matthias, 67459 Böhl-Iggelheim (DE); Jantschewski, Vitalij, 64342 Seeheim (DE); Gerstner, Gerhard, 68526 Ladenburg (DE); Scholten, Claudia, 68163 Mannheim, (DE)
(74) Vertreter: Wagner, Jutta

(56) Entgegenhaltungen:
- EP-A1- 1 785 041
- WO-A-2004/060078
- GB-A- 869 536
- FOOT R J ET AL: "Acrylamide in fried and roasted potato products: a review on progress in mitigation" FOOD ADDITIVES AND CONTAMINANTS, TAYLOR AND FRANCIS, LONDON, GB, Bd. 24, Nr. SUPPL. 1, 1. Januar 2007 (2007-01-01), Seiten 37-46, XP008105437 ISSN: 0265-203X
- PEDRESCHI ET AL: "Acrylamide reduction under different pre-treatments in French fries" JOURNAL OF FOOD ENGINEERING, BARKING, ESSEX, GB, Bd. 79, Nr. 4, 15. November 2006 (2006-11-15), Seiten 1287-1294, XP005728382 ISSN: 0260-8774
- GAMA-BAUMGARTNER F ET AL: "CITRIC ACID TO REDUCE ACRYLAMIDE FORMATION IN FREnch fries and roasted potatoes" MITTEILUNGEN AUS DEM GEBIETE DER LEBENSMITTELUNTERSUCHUNG UNDHYGIENE. TRAVAUX DE CHIMIE ALIMENTAIRE ET D'HYGIENE, BUNDESAMT FUER GESUNDHEITSWESEN, BERN, CH, Bd. 95, Nr. 1, 1. Januar 2004 (2004-01-01), Seiten 110-117, XP008046841

## Beschreibung

Die vorliegende Erfindung betrifft ein Verfahren zur Verminderung des Gehaltes an Acrylamid bei kohlehydrathaltigen Lebensmitteln und kohlehydrathaltige Lebensmittel mit vermindertem Potenzial zur Bildung von Acrylamid bei Erhitzung.

Im Frühjahr 2002 wurde bei verschiedenen kohlehydrathaltigen Lebensmitteln, wie z.B. Pommes Frites, Chips, ein erheblicher Gehalt an Acrylamid festgestellt. Acrylamid ist im Tierversuch nachweislich krebserzeugend und erbgutverändernd. Das Acrylamid stammte jedoch weder aus den Ausgangsprodukten noch aus Zusätzen, ist also nicht auf eine Kontamination von außen zurückzuführen.

Die umgehend eingeleitete Ursachenforschung konnte inzwischen den Bildungsweg weitgehend klären. Demnach wird Acrylamid beim Erhitzen durch eine Maillard-Reaktion der Aminogruppe von Asparaginsäure mit dem anomeren Zentrum von Zuckern gebildet. Die Acrylamidbildung wird dabei durch niedrigen Wassergehalt und hohe Temperaturen, typischerweise über 120 °C wie beim Grillen, Backen, Frittieren, ausgelöst bzw. begünstigt. Da Zucker und Asparaginsäure normaler Bestandteil von stärkehaltigen Lebensmitteln sind, ist die Acrylamidbildung eine unvermeidbare Eigenschaft solcher Produkte bei einer Zubereitung bei höheren Temperaturen. Erste Empfehlungen gingen daher dahin, stärkehaltige Lebensmittel nicht oder möglichst wenig zu erhitzen und/oder den Konsum von höher erhitzen Produkten zu begrenzen.

Mittlerweile sind auch verschiedene Verfahren zur Behandlung von Lebensmitteln entwickelt worden, um die Bildung von Acrylamid zu hemmen oder zu unterdrücken.

WO 2004/060078 beschreibt die Verwendung eines pH-reduzierenden Mittels, wie Säuren, Pufferlösungen oder Fruchtsaft, mit dem das Lebensmittel versetzt, besprüht oder eingeweicht wird. WO 2004/028277 schlägt den Einsatz von Milchsäure-produzierenden Mikroorganismen zur Behandlung von Lebensmitteln vor. In WO 2005/034649 wird schließlich der Zusatz von mehrwertigen Kationen vorgeschlagen.

Trotz der damit erzielten Erfolge besteht weiterhin Bedarf an einfachen, das Lebensmittel in Geschmack, Eigenschaft und Aussehen möglichst wenig verändernden Verfahren zur Acrylamid-Reduktion.

Überraschend wurde nun gefunden, dass eine Behandlung mit Mononatriumcitrat das Potenzial zur Bildung von Acrylamid stark senken kann und insbesondere im Vergleich zu Citronensäure oder Trinatriumcitrat deutlich wirksamer ist.

Die obige Aufgabe wird daher gelöst durch ein Verfahren zur Reduktion des Gehaltes an Acrylamid in erhitzten, kohlehydrathaltigen Lebensmitteln, bei dem das Lebensmittel vor der Erhitzung mit Mononatriumcitrat behandelt wird, insbesondere mit einer wässrigen Lösung von Mononatriumcitrat behandelt wird, wobei die Behandlung einen Gehalt an Mononatriumcitrat in dem Lebensmittel von 0,1 bis 3 Gew.-% bereitstellt. Weiterhin wird die Aufgabe durch kohlehydrathaltige Lebensmittel mit einem verminderten Potenzial zur Bildung von Acrylamid beim Erhitzen gelöst, welche mit Mononatriumcitrat behandelt, insbesondere mit einer wässrigen Lösung von Mononatriumcitrat behandelt, worden sind, wobei die Behandlung einen Gehalt an Mononatriumcitrat in dem Lebensmittel von 0,1 bis 3 Gew.-% bereitstellt.

Mononatriumcitrat ist ein kommerziell verfügbares Produkt, dessen Einsatz in Lebensmitteln, entsprechende Reinheit vorausgesetzt, auf keine Bedenken stößt.

Unter Behandlung wird im Rahmen der vorliegenden Erfindung jedes Verfahren verstanden, das einen gewünschten Gehalt an Mononatriumcitrat in dem Lebensmittel bereitstellen kann. Die Behandlung führt dabei vorteilhafter weise nicht zu einer Beeinträchtigung des Lebensmittels in geschmacklicher oder sensorischer Richtung. Dies ist gerade bei Lebensmitteln wie Pommes Frites oder Chips sehr wichtig, bei denen Aussehen, Sensorik und Haptik eine große Rolle spielen. Das erfindungsgemäße Verfahren gewährleistet, dass sich weder das Aussehen der behandelten Lebensmittel nachteilig verändert noch die sensorischen und/oder haptischen Eigenschaften. Bei den beispielhaft untersuchten Pommes Frites ergab sich keine geschmackliche Veränderung oder gar Verschlechterung. Auch die Knusprigkeit war unverändert. Im Vergleich zu der bekannten Maßnahme der Reduktion der Frittiertemperatur ergibt sich somit der wichtige Vorteil, dass die sensorische Beschaffenheit der Lebensmittel unverändert bleibt bzw. nicht beeinträchtigt wird.

Die erfindungsgemäß zur Behandlung bevorzugt eingesetzte wässrige Lösung kann durch Lösen von Mononatriumcitrat in Wasser hergestellt werden. Konzentrationen von 0,1 bis 10 Gew.-%, vorzugsweise von 0,5 bis 5 Gew.-% und insbesondere von 1 bis 4 Gew.-% haben sich bewährt. Diese Konzentration stellt einen Kompromiss zwischen der Wirkung auf den Acrylamidgehalt einerseits und den Kosten andererseits dar. Auch ist bei wesentlich höheren Konzentrationen eine geschmackliche Beeinträchtigung zu erwarten.

Die wässrige Lösung kann alternativ durch Lösen entsprechender Mengen Citronensäure und Trinatriumcitrat bzw. Dinatriumcitrat hergestellt werden. Da in den verwendeten Konzentrationen die Salze vollständig gelöst werden, ergibt sich kein Unterschied zwischen der Lösung des Salzes und einer durch Lösen entsprechender etwa äquimolarer Mengen Säure und Di- oder Trinatriumsalz hergestellter Lösungen. Die Mengen sollten dabei so gewählt werden, dass das Mol-Verhältnis Na⁺ : Citrat³⁻ von etwa 1,1 : 1 bis etwa 1 : 1,1 beträgt.

Als kohlehydrathaltige Lebensmittel sind beispielsweise Pommes Frites, Chips, Knäckebrot, Frühstückscerealien, Kräcker, Kekse, Lebkuchen, Spekulatius, Salzstangen, Popcorn etc. zu nennen. Insbesondere eignet sich das Verfahren für Kartoffel-Produkte wie Pommes Frites und Chips und ganz besonders für Pommes Frites, sowie für Getreideprodukte wie Frühstückscerealien.

Pommes Frites werden in der Regel vom Verbraucher frisch zubereitet, so dass eine hinsichtlich der Temperatur genau kontrollierte Zubereitung kaum möglich ist. Eine Begrenzung des Acrylamidgehaltes durch die Temperatur scheidet somit aus. Zudem sind die Konsumenten zu einem sehr großen Teil Kinder, die zusätzlich auch noch eher häufig Pommes Frites konsumieren, wodurch die Problematik weiter verschärft wird.

Bei Frühstückscerealien handelt es sich um Fertigprodukte, die von dem Verbraucher direkt in unveränderter Form verzehrt werden. In diesem Fall hat der Verbraucher keinen Einfluss auf den Acrylamidgehalt.

Durch die Behandlung mit der Mononatriumcitratlösung lässt sich die Acrylamidbildung effektiv vermindern. Dabei ist die Wirkung umso stärker, je höher das Potenzial für die Acrylamidbildung des Lebensmittels ist. So wurde in Vorversuchen bei Pommes Frites eine Reduktion des Gehaltes von etwa 2000 µg/kg bei Behandlung mit destilliertem Wasser auf 146 µg/kg bei Behandlung mit 0,6 %-iger Mononatriumcitratlösung gefunden. Bei hinsichtlich der Acrylamidbildung optimierten Frittierbedingungen ergab sich bei der Behandlung mit destilliertem Wasser ein Gehalt von 210 µg/kg, der durch die erfindungsgemäße Behandlung mit Mononatriumcitrat z.B. mit 1 %-iger Lösung auf 160 µg/kg gesenkt werden konnte. Der derzeitige Signalwert für einen bedenklichen Acrylamidgehalt wird mit 530 µg/kg angegeben.

Die erfindungsgemäße Behandlung mit Mononatriumcitrat führt z.B. bei Lösungskonzentrationen von 0,5 bis 4 Gew.-% weder optisch, noch sensorisch oder geschmacklich zu Veränderungen der Pommes Frites.

Die Erfindung eignet sich weiterhin besonders für Getreideprodukte (z. B. aus Hafer, Weizen, Reis, Dinkel, Mais usw.), wie Frühstückscerealien und ähnliche Produkte, die durch Verfahren wie Kochen, Extrudieren und/oder Puffen hergestellt werden.

Die Herstellung beim Puffen geht zumeist von Getreidekörnern aus. Beim Kochen bzw. Extrudieren wird üblicherweise zunächst eine Rohmasse bzw. ein Teig durch Vermischen der Zutaten hergestellt. Flocken können entweder durch Walzen der Getreidekörner oder aus Pellets, die ebenfalls aus einer Rohmasse erzeugt werden, hergestellt werden.

Die Hauptbestandteile der Rohmasse sind jeweils die kohlehydrathaltigen Getreidekomponenten wie Getreidemehl, Getreidegrütze und/oder Getreidegrieß. Dazu kommen üblicherweise geschmacksgebende Zutaten wie z. B. Zucker, Salz, Honig, Kakao oder Gerstenmalz in veränderlichen Mengen je nach Geschmacksrichtung sowie ggfs. weitere Zusätze wie beispielsweise Emulgatoren. Die Rohmasse wird im Prozess mit einer Flüssigkeit, normalerweise Wasser, vermischt. Die löslichen Zutaten können in der Flüssigkeit gelöst werden, wobei die Lösung wird als Sirup bezeichnet wird, oder der Rohmasse direkt zugesetzt werden.

Bei einer Herstellung durch Kochen wird typischerweise die Rohmasse nach dem Vermischen der Zutaten aufgeheizt und längere Zeit bei der gewählten Temperatur gehalten. Das Vermischen erfolgt direkt im Kocher, kann aber insbesondere für Teile der Zutaten auch in separaten Mischern durchgeführt werden. Zum Beispiel wird dem Kocher die Trockenmischung der Getreidekomponenten und der Sirup aus den löslichen Komponenten zugeführt. Typische Bedingungen beim Kochen sind Temperaturen von ca. 110 bis 130 °C bei einem Druck von 1,0 bis 1,6 bar und Zeiten im Bereich von 30 bis 120 Minuten. Anschließend wird häufig zur gleichmäßigen Verteilung der Feuchte die Masse getempert und /oder vorgetrocknet. Beim Tempern wird die Masse, in der Regel ohne Energiezufuhr, für eine bestimmte Zeit, z.B. 60 bis 120 Minuten, ruhen gelassen.

Zur Einstellung der gewünschten Feuchte vor weiteren Prozessschritten (z. B. Reduzierung der Produktfeuchte von 32 - 34% nach dem Kochen auf ca. 18 % beim Walzen) erfolgt normalerweise eine Trocknung. Die Temperatur beim Trocknungsprozess beträgt 60 - 140°C bei einer Verweildauer von 60 - 180 Minuten, je nach Anlage.

Die Formung des Produkts erfolgt häufig durch Pelletieren und/oder Walzen. Zur Herstellung von Flocken, bei denen der Ausgangsrohstoff (z. B. Weizen oder Reis bzw. deren Mehle und Grieße) zu fein ist, wird dieses zunächst pelletiert. Bei der Cornflakes-Herstellung wird keine Pelletierung durchgeführt, hier wird die Maisgrütze oder -körner gewalzt. Je nach Bedarf lässt sich die Flockendicke einstellen.

Zur Fertigstellung werden die Produkte geröstet, was auch die wesentliche Quelle für eine Acrylamidbildung darstellt, da im Röster sehr hohe Temperaturen und eine geringe Produktfeuchte herrschen. Die Temperatur beim Rösten liegt üblicherweise bei 140 bis 280 °C, die Röstzeit beträgt meist 1 bis 4 Minuten, typischerweise etwa 2 Minuten. In der kurzen Röstzeit wird dem Produkt die Feuchte rasch entzogen, was die Produkteigenschaften wie z.B. Geschmack und Farbe positiv beeinflusst, aber auch die Acrylamidbildung fördert.

Bei der Herstellung durch Extrudieren wird ebenfalls ein Teig bzw. eine Rohmasse hergestellt, wobei die Zutaten dem Extruder direkt zugeführt und dort vermischt werden. Die Temperatur im Extruder beträgt typischerweise 80 bis 180 °C, die Verweilzeit der Rohmasse liegt bei 90 bis 240 Sekunden. Auch die extrudierten Produkte durchlaufen in der Regel eine Trocknung, typische Bedingungen sind 80 bis 120 °C für 10 bis 30 Minuten. Häufig werden extrudierte Produkte mit Sirup überzogen und danach in der Regel erneut getrocknet. Die wesentliche Quelle für die Acrylamidbildung stellen die letzten Module im Extruder und die Düsenplatte dar. Hier entstehen neben den hohen Temperaturen auch hohe Drücke, die zur raschen Verdampfung der Feuchte im Produkt führen, was zwar die Produkteigenschaften wie z.B. Geschmack und Farbe positiv beeinflusst, aber auch die Acrylamidbildung fördert.

Die erfindungsgemäße Behandlung der Lebensmittel kann je nach Herstellweise des Lebensmittels durch Zumischen oder durch Eintauchen, Besprühen oder Übergießen, vorzugsweise durch Eintauchen bei Kartoffelprodukten und durch Zumischen bei Getreideprodukten erfolgen.

Das Eintauchen/Besprühen erfolgt typischerweise für einige Sekunden, beispielsweise 1 bis 10, vorzugsweise 2 bis 5 Sekunden. Durch das Eintauchen/Besprühen erfolgt eine Aufnahme von Mononatriumcitrat in das Lebensmittel, die zur Konzentration der Lösung annähernd proportional ist. Beim Zumischen wird eine bestimmte Menge an Mononatriumcitrat dem Produkt direkt zugeführt.

Die Behandlung stellt in dem Lebensmittel einen Gehalt von 0,1 bis 3 Gew.-%, insbesondere von 0,4 bis 1,0 Gew.-% Mononatriumcitrat bezogen auf die Trockenmasse des Lebensmittels bereit.

Die erfindungsgemäße Behandlung durch Eintauchen/Besprühen, insbesondere ein Tauchbad, lässt sich leicht in bestehende Produktionsprozesse integrieren, da die erfindungsgemäß verwendete Lösung lagerstabil ist. Es empfiehlt sich, die Konzentration der Lösung im Tauchbad zu überwachen und durch geeignete Maßnahmen für deren Konstanz zu sorgen. So kann beispielsweise die Lösung umgepumpt werden und durch entsprechenden Austausch bzw. Zufuhr frischer Lösung die Konzentration konstant gehalten werden. Beim Eintauchen beeinflusst die Dauer der Behandlung ebenso wie die Konzentration der Lösung die aufgenommene Menge Mononatriumcitrat. Daher sollte für niedriger konzentrierte Lösungen eine längere Behandlungszeit , z.B. von 5 sec bis zu 10 min, vorzugsweise 1 bis 5 min, gewählt werden. Für höher konzentrierte Lösungen sind bereits 1 bis 10 sec, vorzugsweise 2 bis 5 sec ausreichend. Das erfindungsgemäße Verfahren kann somit auf einfache Weise an Abläufe im Herstellprozess angepasst werden.

Je nach Herstellungsverfahren für die Lebensmittel kommt für die Behandlung auch ein Zumischen in Betracht. So kann das Mononatriumcitrat beispielsweise in trockener Form einem Teig zur Bereitung von Gebäck beigefügt werden. Selbstverständlich kann die Zugabe bei Lebensmitteln, bei deren Herstellung ohnehin Wasser zugesetzt wird, auch durch Zugabe in Form einer Lösung erfolgen.

Wird das Mononatriumcitrat einer Rohmasse zugemischt, so kann es vorteilhaft als Feststoff verwendet werden. In diesem Fall, aber auch generell hat sich das Mononatriumcitrat "Type D" von Jungbunzlauer Ladenburg GmbH als besonders geeignet erwiesen. Im Vergleich zu anderen Mononatriumcitrat Typen (z.B. kristallinen Typen bezeichnet als "F6000" oder "F3500" oder als Pulver bezeichnet als "F0100") löst sich die "Type D" besonders schnell und kann daher insbesondere auch als Trockensubstanz anderen trockenen Bestandteilen zugefügt werden. Durch Leitfähigkeitsmessungen lässt sich zeigen, dass Type D bei Zimmertemperatur innerhalb weniger Sekunden in Wasser vollständig aufgelöst wird, während eine gleiche Menge (20 g/l) kristalliner oder pulverförmiger Typen mehr als 30 Sekunden bzw. mehrere Minuten benötigt. Durch die gute Löslichkeit ist Type D auch für Anwendungen geeignet, bei denen nur eine geringe Wasser-/Flüssigkeitsmenge zur Verfügung steht oder bei der nur wenig Zeit für das vollständige Lösen des Salzes zur Verfügung steht. Außerdem verfügt das Mononatriumcitrat "Type D" aufgrund der besseren Fließfähigkeit im Vergleich zu anderen Typen über sehr gute Fördereigenschaften. Dies ist beispielsweise bei der pneumatischen Förderung ein Vorteil, so benötigt Type D eine geringere Zeit um beispielsweise durch einen Glastrichter mit einem Auslauf-Querschnitt von 2 cm zu laufen als die im Vergleich ebenfalls noch einigermaßen gut lösliche pulverförmige Type F0100.

Die Erfindung soll anhand der folgenden Beispiele näher veranschaulicht werden, ohne sie jedoch auf die konkret beschriebenen Ausführungsformen zu begrenzen. Soweit nichts anderes angegeben ist beziehen sich sämtliche Angaben von % im Rahmen der vorliegenden Erfindung auf das Gewicht.

### Beispiel 1

Die Wirkung der Behandlung mit verschiedenen Substanzen auf den Acrylamidgehalt wurde untersucht. Dazu wurden handelsübliche Tiefkühl-Pommes Frites aufgetaut und in Portionen zu je 175 g für 5 Minuten in eine Lösung der Testsubstanz getaucht. Die Lösungen hatten eine Konzentration von 0,62 Gew.-%, als Blindwert diente destilliertes Wasser. Nach dem Abtropfen wurden die Pommes Frites wieder bei -18 °C eingefroren. Das Frittieren erfolgte nach Herstellerangabe in Pflanzenfett in einer handelsüblichen Friteuse, 8 Minuten bei 175 °C. Anschließend wurde der Acrylamidgehalt bestimmt. Zusätzlich wurden die Pommes Frites auch sensorisch beurteilt. Die Ergebnisse fasst Tabelle 1 zusammen.

| Testsubstanz | Acrylamidgehalt [µg/kg] | Sensorisches Ergebnis im Vergleich zu dest. Wasser |
|---|---|---|
| dest. Wasser | 2074 | |
| Mono-Natriumcitrat | 146 | unverändert |
| Tri-Natriumcitrat | 514 | verstärktes Backaroma |
| Citronensäure | 1061 | unverändert |
| Natriumgluconat | 1290 | unverändert |
| Calciumchlorid | 55 | "medizinischer" Beigeschmack |
| Tri-Calciumcitrat | 873 | unverändert |

Man erkennt deutlich, dass Citronensäure, welche im Stand der Technik vorgeschlagen ist, zwar wirksam ist, aber deutlich weniger wirksam, als das erfindungsgemäße Produkt. Abweichend von den bisherigen Annahmen kommt es offenbar nicht auf eine Senkung des pH-Wertes an, denn diese Senkung fällt bei Citronensäure stärker aus, als bei Mononatriumcitrat und außerdem schneidet auch Trinatriumcitrat deutlich besser ab, als Citronensäure. Dieses Ergebnis ist für den Fachmann vollkommen unerwartet. Noch wirksamer als das erfindungsgemäße Produkt wäre nur Calciumchlorid, dieses verursacht aber bereits in der geringen Konzentration von 0,62 % in der Tauchlösung einen deutlichen Beigeschmack und ist deshalb nicht geeignet. Neben Calciumchlorid zeigte nur Trinatriumcitrat einen Einfluss auf den Geschmack, in diesem Falle jedoch eher eine Verbesserung. Alle anderen Substanzen veränderten die sensorischen Eigenschaften nicht.

### Beispiel 2

Der Einfluss von Konzentration und ein etwaiger Unterschied zwischen Mononatriumcitrat und einem zu Mononatriumcitrat äquimolaren Gemisch aus Trinatriumcitrat und Citronensäure wurde untersucht. Dazu wurden Kartoffeln geschält, zu Pommes Frites geschnitten, 2,5 min. bei 80 °C blanchiert und 2,5 min. in Erdnussöl bei 140 °C vorfrittiert. Danach wurden die Pommes Frites ca. 2 sec. in eine Lösung der Testsubstanz getaucht und nach dem Abtropfen ca. 30 min. bei -20 °C tiefgefroren. Die Lagerung erfolgte bei -20 °C. Für die Tests wurden Portionen à 100 bis 150 g 3 min bei 175 °C in Sonnenblumenöl frittiert. Das Öl wurde nach jeder Portion gewechselt. Bei diesen im Hinblick auf die Acrylamidbildung günstigen Bedingungen, d.h. wenig Acrylamidbildungspotenzial, ergaben sich die folgenden Ergebnisse.

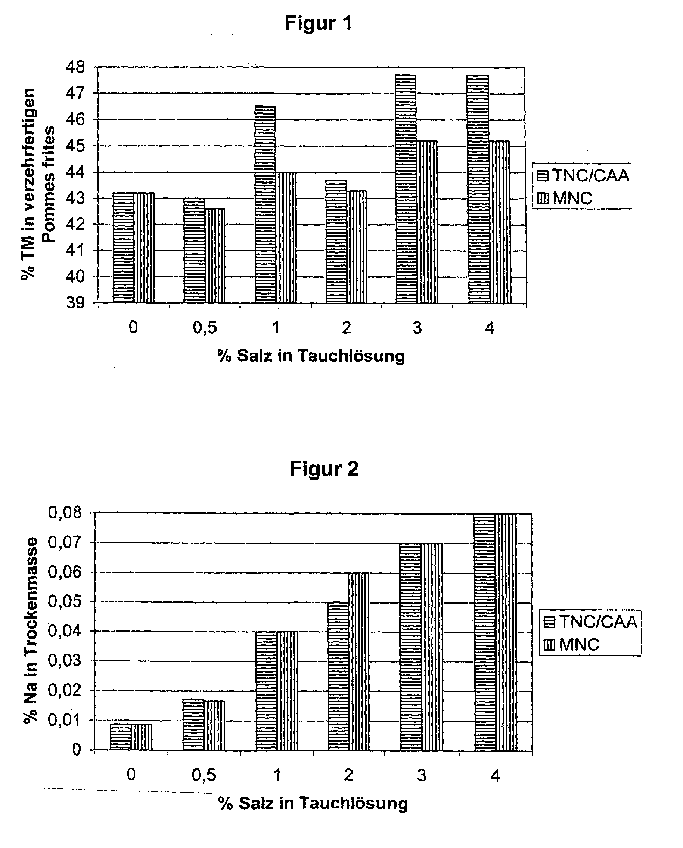

Die Zunahme der Trockenmasse ist in Figur 1 dargestellt. Man erkennt, dass tendenziell die Zunahme der Trockenmasse in den frittierten Pommes Frites bei dem Gemisch (TNC/CAA) höher ausfällt als bei Mononatriumcitrat (MNC). Eine signifikante Zunahme erfolgt für Mononatriumcitrat und das Gemisch ab einer Tauchbadkonzentration von 3 Gew.-%.

Die Zunahme des Natriumgehalts in der Trockenmasse wurde in Abhängigkeit von der Tauchbadkonzentration gemessen. Wie die in Figur 2 veranschaulichten Ergebnisse zeigen, erfolgt sowohl für Mononatriumcitrat (MNC) als auch für das Gemisch (TNC/CAA) eine näherungsweise zur Konzentration der Tauchlösung proportionale Zunahme des Natriumgehaltes.

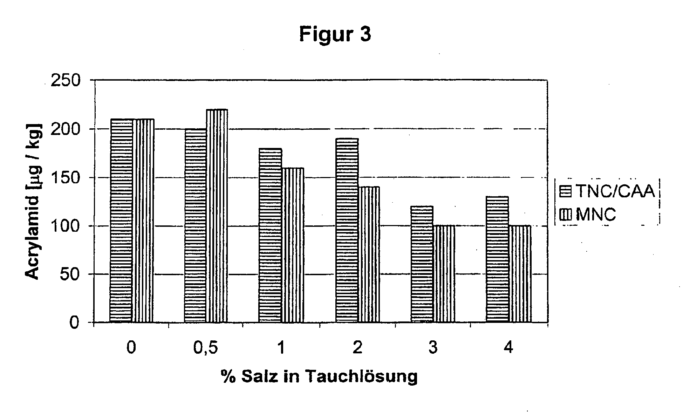

Schließlich wurde der Acrylamidgehalt gemessen und ist in Figur 3 veranschaulicht. Man sieht, dass bei einer Konzentration von 0,5 Gew.-% unter den im Hinblick auf die Acrylamidbildung optimierten Bedingungen noch keine signifikante Reduktion gemessen wurde. Bei Konzentrationen von 1, 2 und 3 Gew.-% kann eine erhebliche Senkung erreicht werden, während bei noch höheren Konzentrationen keine signifikante weitere Verbesserung mehr erzielt wird. Ein signifikanter Unterschied zwischen Mononatriumcitrat (MNC) und dem Gemisch (TNC/CAA) ist nicht zu verzeichnen, wenn auch Mononatriumcitrat stets etwas bessere Werte ergibt. Es lässt sich also schließen, dass das erfindungsgemäße Verfahren geeignet ist, das Potenzial zur Acrylamidbildung auf einen niedrigen Level abzusenken, so dass die Einhaltung von Obergrenzen zuverlässig realisierbar ist. Gerade bei ungünstigen Bedingung, d.h. hohem Potenzial der Pommes Frites und/oder ungünstigen Frittierbedingungen wird Mononatriumcitrat besonders wirksam. Ein weiterer großer Vorteil ist, dass Mononatriumcitrat den Geschmack, das Aussehen und die Sensorik der Lebensmittel nicht beeinflusst. Da bei Lebensmitteln die Sensorik eine mitentscheidende Rolle spielt , ist es extrem wichtig, weder den optischen noch den sensorischen Eindruck beim Anfassen und Kauen zu beeinträchtigen. Beides ist durch das erfindungsgemäße Verfahren gewährleistet.

### Beispiel 3

Es wurden Weizenvollkornflocken nach dem klassischen Kochverfahren hergestellt. Tabelle 2 zeigt die verwendeten Zutaten. Es wurde Mononatriumcitrat "Type D" von Jungbunzlauer Ladenburg GmbH eingesetzt. Auf jeweils 78 Gewichtsteile der in der Tabelle genannten Zutaten wurden 22 Gew.-Teile Wasser verwendet.

**Tabelle 2**

| | **Menge [%] in Mischung** | | | |
|---|---|---|---|---|
| **Zutaten** | **A** | **B** | **C** | **D** |
| Vollkornweizengrütze | 60,76 | 60,46 | 60,29 | 60,00 |
| Weizenkleie | 20,25 | 20,5 | 20,12 | 20,00 |
| Zucker | 16,20 | 16,12 | 16,08 | 16,00 |
| Salz | 1,24 | 1,24 | 1,24 | 1,23 |
| Gerstenmalz | 0,68 | 0,67 | 0,67 | 0,67 |
| Mononatriumcitrat | 0,00 | 0,50 | 0,75 | 1,25 |
| Honig | 0,68 | 0,67 | 0,67 | 0,67 |
| Emulgator | 0,18 | 0,18 | 0,18 | 0,18 |

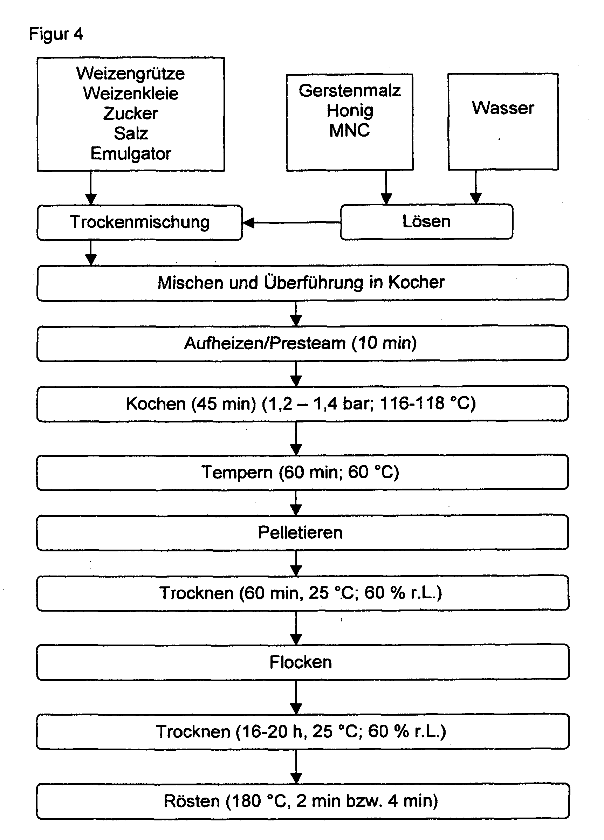

Die Herstellung der Flocken erfolgte gemäß dem in Figur 4 gezeigten Schema. Die Getreidekomponenten (Vollkornweizengrütze und Weizenkleie) wurden mit Zucker, Salz und Emulgator trocken vermischt. Gerstenmalz, Honig und die angegebene Menge Mononatriumcitrat wurden in Wasser gelöst und mit der Trockenmischung vermengt. Anschließend wurde die Masse in einen Kocher überführt. Nach einem etwa 10 minütigen Aufheizen erfolgte das Kochen für 45 Minuten bei 116 bis 118 °C und 1,2 bis 1,4 bar. Ein Tempern bei 60 °C für 60 Minuten schloss sich an. Anschließend wurde die Masse pelletiert und die Pellets 60 Minuten bei 25 °C und 60 % rel. Luftfeuchte getrocknet. Es wurden Flocken hergestellt und nochmals 16 bis 20 h bei 25 °C und 60 % rel. Luftfeuchte getrocknet. Abschließend wurde das Produkt bei 180 °C für 2 oder 4 Minuten geröstet.

Die sensorische Beurteilung der Frühstückscerealien ist in Tabelle 3 zusammengefasst.

**Tabelle 3**

| Mischung | Sensorische Beurteilung | Abweichung zum Standard |
|---|---|---|
| A Standard ohne MNC | hellbraune Farbe, süßlich-malzig | - |
| B mit 0,5 % MNC | hellbraune Farbe, süßlich-malzig | keine |
| C mit 0,75 % MNC | hellbraune Farbe, süßlich-malzig | keine |
| D mit 1,25 % MNC | hellbraune Farbe, süßlichmalzig, leicht sauer | geringe |

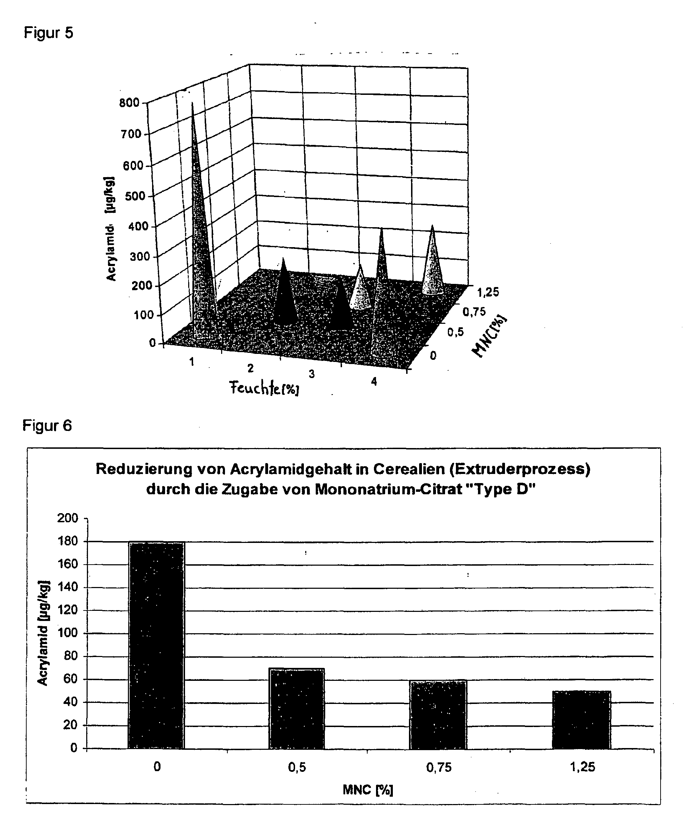

Die Ergebnisse der Acrylamidmessung sind in Figur 5 und Tabelle 4 dargestellt. Im Labormaßstab war eine reproduzierbare Feuchteeinstellung beim Rösten nicht möglich, daher ist in Tabelle 4 und Figur 5 jeweils die Feuchte mit angegeben.

**Tabelle 4**

| Mischung | Feuchte [%] | Acrylamid [µg/kg] |
|---|---|---|
| A Standard ohne MNC | 1 | 785 |
| A Standard ohne MNC | 4 | 415 |
| B mit 0,5 % MNC | 2 | 225 |
| B mit 0,5 % MNC | 3 | 170 |
| C mit 0,75 % MNC | 3 | 155 |
| D mit 1,25 % MNC | 4 | 252 |

Die erfindungsgemäße Behandlung mit Mononatriumcitrat führt jeweils zu einer signifikanten Reduktion des Gehalts an Acrylamid, je nach Feuchte um bis zu 80 %. Wie schon bei den Pommes Frites wird auch hier wieder eine um so stärkere Reduktion erreicht, je höher der Ausgangswert liegt. Es kann also davon ausgegangen werden, dass durch das erfindungsgemäße Verfahren auch kritischere Ware zuverlässig auf unbedenkliche Gehalte an Acrylamid gebracht werden kann.

### Beispiel 4

Für die Untersuchungen wurden im Extruder "Schoko-Bällchen" hergestellt. Die Zutaten sind in Tabelle 5 aufgelistet. Auf Grund des sehr kurzen Herstellprozesses wurde das sehr schnell lösliche Mononatriumcitrat "Type D" von Jungbunzlauer Ladenburg GmbH eingesetzt. Auf jeweils 78 Gewichtsteile der in der Tabelle genannten Zutaten wurden 22 Gew.-Teile Wasser verwendet.

**Tabelle 5**

| | **Menge [%] in Mischung** | | | |
|---|---|---|---|---|
| **Zutat** | **E** | **F** | **G** | **H** |
| Vollkornweizenmehl | 44,27 | 44,05 | 43,93 | 43,71 |
| Maismehl | 35,17 | 35,00 | 34,90 | 34,73 |
| Weizenstärke | 7,17 | 7,13 | 7,12 | 7,07 |
| Zucker | 8,77 | 8,72 | 8,70 | 8,67 |
| Kakao (20/22% Fett) | 4,37 | 4,33 | 4,33 | 4,32 |
| Mononatriumcitrat Type D | 0,00 | 0,50 | 0,75 | 1,25 |
| Salz | 0,27 | 0,27 | 0,27 | 0,27 |

Für die Herstellung des Extrudats wurden alle Zutaten homogen vermischt und dem Extruder zudosiert. Bei einer Leistung von ca. 20-25 kg/h wurden ca. 1,5 bis 2 1/h Wasser dem Prozess zugeführt. Die Extrudertemperatur in einzelnen Modulen betrug: Modul 1: 90 °C; Modul 2: 125 °C; Modul 3: 130-135 °C und Modul 4: 135-140°C, an der Düsenplatte ca. 140°C. Der Druck während des Extrudierens betrug ca. 50 bar. Nach dem Extrudieren wurde das Produkt geschnitten und für 2 min. im Trockner mit Umluft bei 110 °C auf die gewünschte Produktfeuchte von ca. 3,5% nachgetrocknet.

Die sensorische Beurteilung der Frühstückscerealien ist in Tabelle 6 zusammengefasst.

**Tabelle 6**

| Mischung | Sensorische Beurteilung | Abweichung zum Standard |
|---|---|---|
| E Standard ohne MNC | braune Farbe, süßlich nach Getreide | - |
| F mit 0,5 % MNC | braune Farbe, süßlich nach Getreide | keine |
| G mit 0,75 % MNC | braune Farbe, süßlich nach Getreide | keine |
| H mit 1,25 % MNC | braune Farbe, süßlich nach Getreide, leicht säuerlich | geringe |

Die Ergebnisse der Acrylamidmessung sind in Figur 6 dargestellt. Man sieht deutlich, dass die erfindungsgemäße Behandlung mit Mononatriumcitrat zu einer signifikanten Reduktion des Acrylamidgehalts von bis zu 70 % führt.

## Patentansprüche

1. Verfahren zur Reduktion des Gehaltes an Acrylamid in erhitzten, kohlehydrathaltigen Lebensmitteln, **dadurch gekennzeichnet, dass** das Lebensmittel vor der Erhitzung mit Mononatriumcitrat behandelt wird, wobei die Behandlung einen Gehalt an Mononatriumcitrat in dem Lebensmittel von 0,1 bis 3 Gew.-% bezogen auf die Trockenmasse des Lebensmittels bereitstellt.

2. Verfahren gemäß Anspruch 1, **dadurch gekennzeichnet, dass** das Lebensmittel mit einer wässrigen Lösung von Mononatriumcitrat behandelt, insbesondere mit der Lösung besprüht oder in die Lösung eingetaucht, wird.

3. Verfahren gemäß Anspruch 2, **dadurch gekennzeichnet, dass** die Lösung eine Konzentration im Bereich von 0,1 bis 10 Gew.-%, vorzugsweise von 0,5 bis 5 Gew.-%, insbesondere von 1 bis 4 Gew.-% aufweist.

4. Verfahren gemäß Anspruch 1, **dadurch gekennzeichnet, dass** das Mononatriumcitrat einer Rohmasse bzw. einem Teig zur Herstellung des Lebensmittels zugemischt wird.

5. Verfahren gemäß einem der Ansprüche 1 bis 4, **dadurch gekennzeichnet, dass** das Mononatriumcitrat in situ aus einer Mischung von Citronensäure und Trinatriumcitrat im Mol-Verhältnis Na⁺ : Citrat³⁻ von 1,1 : 1 bis 1 : 1,1 in einer Lösung gebildet wird.

6. Verfahren gemäß mindestens einem der vorhergehenden Ansprüche, **dadurch gekennzeichnet, dass** die Behandlung einen Gehalt an Mononatriumcitrat in dem Lebensmittel von 0,4 bis 1,0 Gew.-% bezogen auf die Trockenmasse des Lebensmittels bereitstellt.

7. Kohlehydrathaltige Lebensmittel in Form von Pommes Frites oder Chips mit einem verminderten Potenzial zur Bildung von Acrylamid beim Erhitzen **dadurch gekennzeichnet, dass** das Lebensmittel vor dem Erhitzen mit einer wässerigen Lösung von Mononatriumcitrat in einer Konzentration im Bereich von 0,1 bis 10 Gew.-% durch Eintauchen, Besprühen und/oder Übergießen behandelt worden ist, wobei die Behandlung in dem Lebensmittel einen Gehalt an Mononatriumcitrat von 0,1 bis 3 Gew.-% bezogen auf die Trockenmasse des Lebensmittels bereitstellt.

8. Kohlehydrathaltige Lebensmittel in Form von Frühstückscerealien, welche durch Kochen, Extrudieren und/oder Puffen hergestellt werden **dadurch gekennzeichnet, dass** das Lebensmittel vor dem Erhitzen mit Mononatriumcitrat behandelt worden ist, wobei die Behandlung in dem Lebensmittel einen Gehalt an Mononatriumcitrat von 0,1 bis 3 Gew.-% bezogen auf die Trockenmasse des Lebensmittels bereitstellt.

9. Kohlehydrathaltige Lebensmittel gemäß Anspruch 8, **dadurch gekennzeichnet, dass** das Mononatriumcitrat einem Teig oder einer Rohmasse zur Herstellung des Lebensmittels zugemischt worden ist.

## Claims

1. Method for reducing the content of acrylamide in heated, carbohydrate-containing foods, **characterized in that** the food is treated prior to heating with monosodium citrate, wherein the treatment provides a content of monosodium citrate in the food from 0.1 to 3 wt.-% based on dry weight of the food.

2. Method according to claim 1, **characterized in that** the foodstuff is treated with an aqueous solution of monosodium citrate, in particular sprayed with the solution or immersed in the solution.

3. Method according to claim 2, **characterized in that** the solution has a concentration in the range from 0.1 to 10 wt.-%, preferably from 0.5 to 5 wt.-% and especially preferred from 1 to 4 wt.-%.

4. Method according to claim 1, **characterized in that** the monosodium citrate is admixed to a raw composition or a dough for the preparation of the food.

5. Method according to any one of claims 1 to 4, **characterized in that** the monosodium citrate is formed in situ in a solution from a mixture of citric acid and trisodium citrate in a molar ratio Na⁺ : citrate³⁻ from 1.1: 1 to 1: 1.1.

6. Method according to any one of the preceding claims, **characterized in that** the treatment provides a content of monosodium citrate in the food from 0.4 to 1.0 wt.-% based on dry weight of food.

7. Carbohydrate-containing foods in the form of french fries or chips with a reduced potential for the formation of acrylamide during heating, **characterized in that** the food has been treated prior to heating with an aqueous solution of monosodium citrate having a concentration of monosodium citrate in the range from 0.1 to 10 wt.-% by soaking, spraying and/or pouring over, wherein the treatment provides a content of monosodium citrate in the food from 0.1 to 3 wt.-% based on dry weight of the food.

8. Carbohydrate-containing foods in the form of breakfast cereals, which are manufactured by cooking, extruding and/or puffing, **characterized in that** the food has been treated prior to heating with monosodium citrate, wherein the treatment provides a content of monosodium citrate in the food from 0.1 to 3 wt.-% based on dry weight of the food.

9. Carbohydrate-containing foods according to claim 8, **characterized in that** the monosodium citrate has been added to a dough or a raw composition for manufacturing the food.

## Revendications

1. Procédé pour la réduction de la teneur en acrylamide dans des aliments chauffés, contenant des hydrates de carbone, **caractérisé en ce que** l'aliment est traité avant le chauffage avec du citrate monosodique, le traitement mettant à disposition une teneur en citrate monosodique dans l'aliment de 0,1 à 3% en poids par rapport à la masse sèche de l'aliment.

2. Procédé selon la revendication 1, **caractérisé en ce que** l'aliment est traité par une solution aqueuse de citrate monosodique, en particulier aspergé par la solution ou plongé dans la solution.

3. Procédé selon la revendication 2, **caractérisé en ce que** la solution présente une concentration dans la plage de 0,1 à 10% en poids, de préférence de 0,5 à 5% en poids, en particulier de 1 à 4% en poids.

4. Procédé selon la revendication 1, **caractérisé en ce que** le citrate monosodique est mélangé à une masse brute ou à une pâte en vue de la préparation de l'aliment.

5. Procédé selon l'une quelconque des revendications 1 à 4, **caractérisé en ce que** le citrate monosodique est formé in situ dans une solution à partir d'un mélange d'acide citrique et de citrate trisodique dans un rapport molaire Na⁺ :citrate³⁻ de 1,1:1 à 1:1,1.

6. Procédé selon au moins l'une quelconque des revendications précédentes, **caractérisé en ce que** le traitement met à disposition une teneur en citrate monosodique dans l'aliment de 0,4 à 1,0% en poids par rapport à la masse sèche de l'aliment.

7. Aliment contenant des hydrates de carbone sous forme de frites ou chips présentant un potentiel réduit de formation d'acrylamide lors du chauffage, **caractérisé en ce que** l'aliment a été traité avant le chauffage par une solution aqueuse de citrate monosodique en une concentration dans la plage de 0,1 à 10% en poids par immersion, aspersion et/ou arrosage, le traitement mettant à disposition dans l'aliment une teneur en citrate monosodique de 0,1 à 3% en poids par rapport à la masse sèche de l'aliment.

8. Aliment contenant des hydrates de carbone sous forme de céréales pour le petit déjeuner, qui sont préparées par cuisson, extrusion et/ou soufflage, **caractérisé en ce que** l'aliment a été traité avant le chauffage par du citrate monosodique, le traitement mettant à disposition dans l'aliment une teneur en citrate monosodique de 0,1 à 3% en poids par rapport à la masse sèche de l'aliment.

9. Aliment contenant des hydrates de carbone selon la revendication 8, **caractérisé en ce que** le citrate monosodique est mélangé à une pâte ou à une masse brute en vue de la préparation de l'aliment.
